## Europäisches Patentamt

(19) **European Patent Office**

**Office européen des brevets**

(11) Publication number: **0 226 650 B1**

(12) # EUROPEAN PATENT SPECIFICATION

(45) Date of publication of the patent specification: **25.10.89**

(21) Application number: **85116240.4**

(22) Date of filing: **19.12.85**

(51) Int. Cl.⁴: **B23K 1/08, H05K 3/34**

(54) Lead wire soldering apparatus.

(43) Date of publication of application:
**01.07.87 Bulletin 87/27**

(45) Publication of the grant of the patent:
**25.10.89 Bulletin 89/43**

(84) Designated Contracting States:
**AT BE CH DE FR GB IT LI LU NL SE**

(56) References cited:
**DE-B- 2 844 236**
**GB-A- 1 225 361**
**GB-A- 1 425 743**
**GB-A- 1 434 833**
**US-A- 3 995 588**
**US-A- 4 402 448**
**US-A- 4 573 430**

**PATENT ABSTRACTS OF JAPAN, vol. 8,
no. 54 (M-282)[1491], 10th March 1984; & JP - A
- 58 205 673 (TOUKAI RIKA DENKI SEISAKUSHO
K.K.) 30-11-1983**

(73) Proprietor: HONEYWELL INC., Honeywell Plaza,
Minneapolis Minnesota 55408(US)

(72) Inventor: Benson, Florence G., 121 Lakeshore Drive, Big
Lake Minnesota 55309(US)
Inventor: Shireman, Mark J., 1856 Melrose Avenue
South, St. Louis Park, Minn. 55426(US)

(74) Representative: Herzbach, Dieter et al, Honeywell
Europe S.A. Holding KG Patent- und Lizenzabteilung
Kaiserleistrasse 55 Postfach 184, D-6050 Offenbach am
Main(DE)

ACTORUM AG

## Description

The present invention relates to a lead wire soldering apparatus according to the preamble of Claim 1.

It is advantageous for commercial users of electrical components to be able to purchase much used components in large quantities, for later use as needed. To facilitate these large purchases, suppliers sometimes package components by mounting them between long tapes wound on spools or reels, which are easily stored by the purchasers, and from which the components are easily accessible.

In industrial applications, components are advantageously positioned physically on circuit boards with their conductors extending through holes in conductive patterns on the boards, to which patterns they are connected by wave soldering. This means that the solderability of the component conductors must be good at the time of use, regardless of how long a period of storage has occurred.

Various suppliers use various finishes on the component conductors, however: coatings of gold, silver, and tin are known, which may be of different thicknesses, porosities, and surface contamination. It has been found that a considerable amount of "touch up" action is often required after wave soldering, to perfect connections which were not made satisfactorily, and this is an expensive, manual process. The period of storage between purchase and use also has an unpredictable affect on the solderability of the component's conductors.

One way of overcoming this is to hand-tin all the conductors as the components are taken from the storage reels and before they are mounted on the circuit boards, but this is also a very costly and time consuming process.

A lead wire soldering apparatus according to the preamble of claim 1 is known from DE-BI 2 844 236. There skinned wire ends by a not shown transportation device are guides through a tin cascade which falls down from a chimney. The chimney comprises a vertical portion for directing an upward flow of molten tin. One sidewall of said chimney is narrower than the other sidewallmso that a lateral overflow of the molten tin takes place. An adjustable guiding plate serves to adjust the tin cascade with respect to the skinned wire ends.

Furthermore, US-A 3 995 588 discloses for forming layers of fusible metal on certain articles. This apparatus comprises conveying means supporting said articles, in particular holders and serving to dip the articles into a solder and flux mixture at their transportation. The solder and flux material is a powdered alloy which needs to be heated in order to melt on said articles. Heating, cleaning and drying stations therefor succeed said solder and flux station.

Departing from this prior art, it is the object of the present invention to provide an apparatus for automatically tinning the leads of tape-stored electrical components without removing the components from the tapes without damaging said components by the molten solder and without wasting molten solder.

This object is achieved according to the characterizing features of claim 1. Further advantageous embodiments of the present invention may be taken from the dependent claims.

The present invention comprises an apparatus for automatically tinning the leads of tape-stored electrical components immediately upon receipt from the suppliers without removing the components from the tapes. This has been found to overcome the tendency of the leads to become unsolderable with time and can be done rapidly, automatically and inexpensively irrespective of the surface treatment of the conductors as supplied. The arrangement is equally effective for components with "axial leads" extending to tapes in opposite directions from opposite ends of the components and for components with "radial leads" extending to a single tape in a single direction from the component. Practice of the invention results in a supply of components of consistent solderability at any time of use no matter how they were originally supplied.

Under reference to the attached drawings, in the following the apparatus according to the inverntion shall be further explained. It shows:

Figure 1 a portion of a supply of components as packaged with axial leads;

Figure 2 a block diagram of a lead wire tinning system according to the invention;

Figure 3 a plan view of a portion of the invention;

Figure 4 a fragmentary plan view of a portion of Figure 3 to a larger scale;

Figure 5 a fragmentary sectional view along the line 5-5 of Figure 4 showing a component in place;

Figure 6 a fragmentary sectional view along the line 6-6 of Figure 4 showing a component in place;

Figure 7 a view like Figure 5 but taken along the line 7-7 of Figure 3; and

Figure 8 a portion of a supply of components as packaged with radial leads.

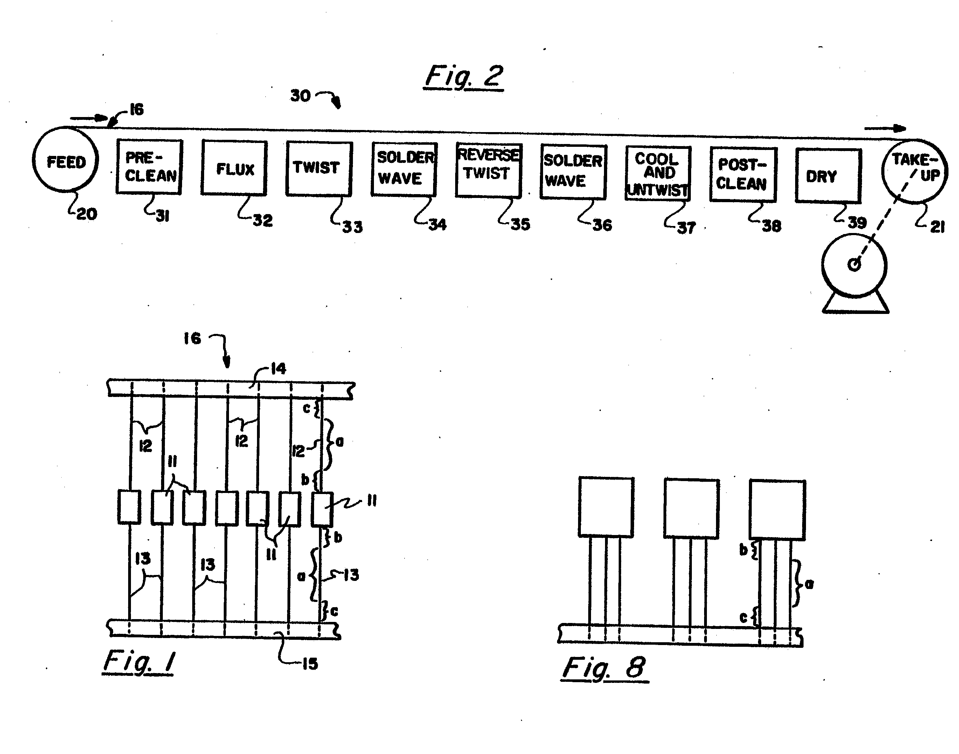

Referring now to FIGURE 1, there is shown a portion of a supply of electrical components as packaged for tape storage. Here a plurality of diodes 11 have axial leads 12 and 13 extending from opposite ends thereof in opposite directions. A first adhesive support tape 14 extends orthogonally to the free ends of leads 12 and a second support tape 15 extends orthogonally to the free ends of leads 13, so that the assembly comprises what may be called a "ribbon" 16 of components. It is desired to retin or solder-coat the portions "a" of each lead, as these are the portions which will later be used in assembling circuitry. Liquid solder should not be applied to portions "b" as the resulting heat may be detrimental to the components; and similarly portions "c" should not be contacted with solder to avoid heat degredation of tapes 14 and 15.

FIGURE 2 shows that in the apparatus ribbon 16 is drawn from a feed reel 20 to a driven take-up reel 21 along a path having a number of treatment stations. Except as will presently be pointed out, the conductors of the components remain generally horizontal while following this path. This may be conveniently arranged by providing properly spaced and oriented rails in which tapes 14 and 15 are guided, the tapes being extended beyond the components at each end of the ribbon to lead the latter into and out of the equipment.

The path is identified by the general reference numeral 30, and includes in sequence a precleaning station 31, a fluxing station 32, a first twisting station 33, a first solder wave station 34, a reverse twisting station 35, a second solder wave station 36, a cooling and untwisting station 37, a post cleaning station 38, and a drying station 39.

Precleaning station 31 has nozzle means for applying cleaning solution to the conductors. Fluxing station 32 has foam head means for applying liquid flux to the conductors, particularly to portions "a" thereof. In twisting station 33 the tape is twisted to an angle of approximately 20 degrees so that leads 12 slope downwardly from components 11. This orientation is maintained through first solder wave station 34, which will be described below. In second twisting station 35 the twist is reversed so that leads 13 slope downwards from components 11. After passing solder wave station 36 the ribbon passes through cooling station 37 which, if desired, includes fan or blowing means, and in which the ribbon is restored to a normal horizontal orientation. Postcleaning station 38 has nozzle means directing a stream of water to flow against the soldered conductors, and the components and tapes are dried by suitable means in station 39 for discharge tc take-up reel 21, after which they may be stored until the components are needed for use.

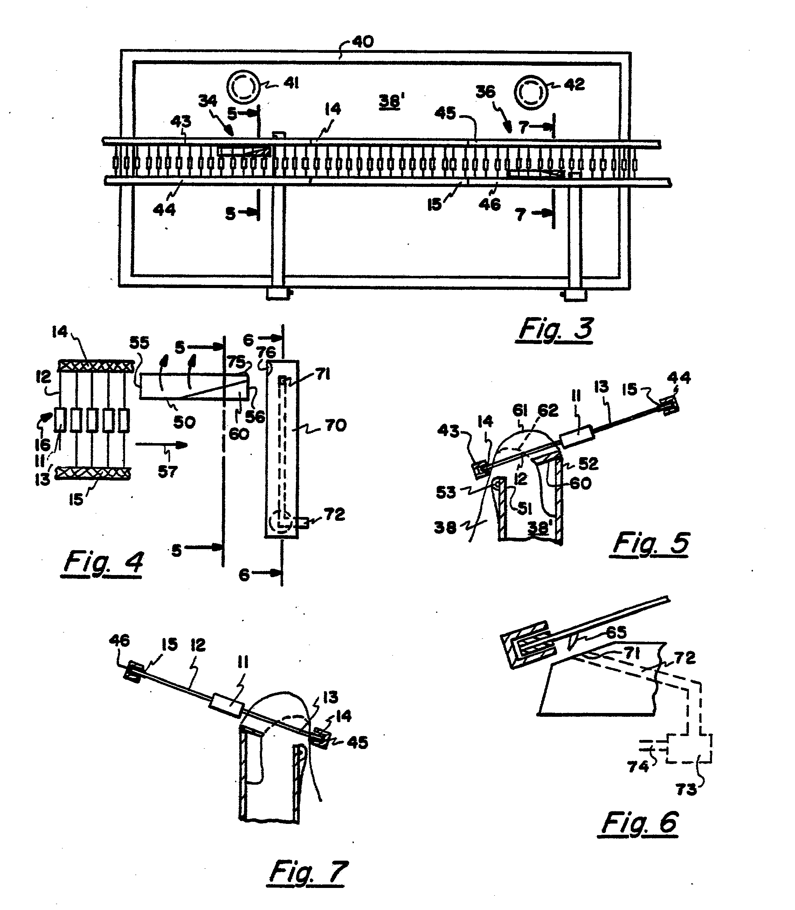

Turning now to FIGURE 3, a satisfactory embodiment of stations 33 to 37 is shown to comprise a chamber or tray 40, with heat-insulating walls, in which a supply of solder 38' is maintained molten by suitable heating means not shown. Liquid solder is continuously pumped from chamber 40 by a first liquid metal pump 41 to first solder wave station 34, and similarly liquid solder is continuously supplied from tray 40 by a second liquid metal pump 42 to second solder wave station 36. Ribbon 16 is drawn from left to right past station 34 in tracks 43 and 44, which terminate just beyond station 34. Then the ribbon is drawn past station 36 in tracks 45 and 46, which begin just before station 36. Tracks 43 and 44 cause ribbon 16 to twist from a nominal horizontal orientation by about 20 degrees in a first direction, track 44 and tape 15 being higher than track 43 and tape 14. On the other hand, track 45 is higher than track 46, so that in these tracks tape 14 is higher than tape 15 and the ribbon is twisted to an orientation displaced from the horizontal by about 20 degrees in the opposite direction. The gap between tracks 43, 44 and tracks 45, 46 comprises reverse twisting station 35. Tape 14 travels first in track 43 and then in track 45, while tape 15 travels first in track 44 and then in track 46, so that a forty degree twist in ribbon 16 occurs. By this arrangement portions "a" of leads 12 are retinned at station 34, and then portions "a" of leads 13 are retinned at station 36, as will now be described.

Stations 34 and 36 are similar, and only one will be described in detail. Station 34 includes a vertical riser or chimney 50 in which upward flow of molten solder is maintained by a suitable pump: pumps of this sort are commercially available. At the top of a chimney one side 51 is lower than the other side 52, and has a rolled edge as indicated at 53 over which the solder 38' flows. The ribbon 16 of components moves across the top of chimney 50 from end 55 to end 56, as indicated by the arrow 57.

A wave shaper 60 is provided in chimney 50 to change the shape of the solder wave emerging from the chimney: the wave shape near end 55 is indicated at 61 in FIGURE 5, and the wave shape near end 56 is indicated at 62. Tapes 14 and 15 move past chimney 50 in rails 43 and 44 so positioned that when each component first enters the solder wave most of its length, portion "a" is submerged, but as the ribbon proceeds the submerged length of conductor 12 decreases. By this arrangement any excess solder on conductor 12 runs toward the lower end to form what may loosely be termed an "icicle" 65, although it is in liquid rather than solid state.

If allowed to solidify, such icicles would seriously interfere with the subsequent incorporation of the components in the circuit boards, and so forth, so means is provided for removing the excess solder before it solidifies. Immediately adjacent to end 56 of chimney 50 there is provided a heated block 70 having a port 71 positioned for near passage by the components as they leave the chimney. A vacuum line 72 connects port 71 with a collection jar 73 which is maintained at subatmospheric pressure by a suitable pump connection 74. As each conductor 12 passes port 71, any "icicle" of excess liquid solder is pneumatically removed to jar 73.

For most satisfactory flow of liquid solder, it has been found helpful to modify edge 51 by providing a slight curve 75, and to provide block 70 with a recess 76, to enable slight flow of liquid metal in the direction of movement of the ribbon.

Station 36 is like station 34 except that the top of the chimney is bevelled in the opposite direction, and the rails lead conductors 13 through the solder instead of conductors 12. It will be apparent that if components are being treated which have radial rather than axial leads, only one tape and one solder wave station are necessary.

## Claims

1. Lead wire soldering apparatus comprising a solder wave station (34, 36) establishing a wave (61, 62) of liquid solder (38') and comprising means (43 – 46, 20, 21) transporting along an axis (57, 30) electrical components (11) having at least one linear conductor (12, 13) extending transverse to said axis to pass through said wave of solder, characterized by the following stations in succession: a feed reel (30) carrying a succession of said electrical components (11) on tape means (14, 15) orthogonally interconnecting the ends of said conductors (12, 13); a precleaning station (31) having nozzle means applying cleaning solution to said predetermined portions of said conductor; a fluxing station (32) having foam head means for applying liquid flux to said portions of said conducters; means (33; 43, 44) orienting said tape means so that first conductors (12) slope

downwardly from first ends of said components (11); said solder wave station (34) establishing a wave (61, 62) of liquid solder having a convex configuration transverse to said path (30) so that said chosen portions of said conductors (12) pass through and emerge from said wave with said convex figured wave (61, 62) having a decreasing cross-sectional area along said axis (57, 30), said wave station including means (70 – 74) for removing axis solder (65) from the lower ends of said conductors; a cooling station (37); a post cleaning station (38) having nozzle means applying rinsing liquid to said portions of said conductors; a drying station (39); and a take up reel (21) for said tape means (14, 15).

2. Apparatus according to claim 1, further characterized by:

means (35; 45, 46) reorienting said tape means (14, 15) so that second conductors (13) slope downward from second ends of said components (11); and

a second solder wave station (36) establishing a wave (61, 62) of liquid solder having a convex configuration transverse to said path (30) so that said chosen portions of said second conductors (13) pass through and emerge from said wave, with said convex figured wave (61,62) having a decreasing cross-sectional area along said axis (57, 30), said wave station including means (70 – 74) for removing excess solder from the lower ends of said second conductors (13).

3. Apparatus according to claim 1 or 2, characterized in that said means (70 – 74) for removing from said conductor (12, 13) any excessive solder remaining thereon includes heating means (70) to maintain said excess solder in liquid phase, and suction means (73, 74) for drawing said excess solder from said conductor.

4. Apparatus according to claim 3, characterized by means for decreasing the cross-sectional area of said convex wave configuration comprising a vertical chimney (50) for upward flow of molten solder (38') and a cover plate (60) for reducing the opening of said chimney (50) along said axis (57, 30).

5. Apparatus according to claim 4, characterized in that said cover plate (60) is inclined from said one side to the other side of said vertical chimney (50) to match the downward slope of said components (11).

6. Apparatus according to claim 5, characterized in that said cover plate (60) is triangular-shaped.

**Revendications**

1. Un appareil de brasage de fils conducteurs comprenant une station de vague de brasage (34, 36) établissant une vague (61, 62) de brasure liquide (38') et comprenant des moyens (43 à 46, 20, 21) transportant le long d'un axe (57, 30) des composants électriques (11) comportant au moins un conducteur linéaire (12, 13) s'étendant transversalement audit axe pour traverser ladite vague de brasure, caractérisé par les stations ci-après qui se suivent:

un rouleau d'alimentation (30) portant une succession desdits composants électriques (11) sur des moyens formant bandes (14, 15) reliant orthogonalement les extrémités desdits conducteurs (12, 13); une station de nettoyage avant brasage (31) comportant des moyens formant ajutages appliquant la solution de nettoyage auxdites parties prédéterminées dudit conducteur;

une station de fluxage (32) possédant des moyens de têtes en mousse pour appliquer le flux liquide auxdites parties desdits conducteurs:

des moyens (33; 43, 44) orientant lesdits moyens formant bandes de façon telle que les premiers conducteurs (12) soient en pente descendante à partir des premières extrémités desdits composants (11);

ladite station de vague de brasure (34) établissant une vague (61, 62) de brasure liquide possédant une configuration convexe transversale audit parcours (30) de sorte que lesdites parties choisies desdits conducteurs (12) traversent ladite vague et en émergent, ladite vague de configuration convexe (61, 62) possédant une surface décroissante en coupe transversale le long dudit axe (57, 30), ladite station de vague comprenant des moyens (70 à 74) pour enlever la brasure d'axe (65) des extrémités inférieures desdits conducteurs;

une station de refroidissement (37);

une station de nettoyage après brasage (38) possédant des moyens d'ajutages appliquant un liquide de rinçage auxdites parties desdits conducteurs;

une station de séchage (39); et

une bobine réceptrice (21) pour lesdits moyens formant bandes (14, 15).

2. Appareil selon la revendication 1, caractérisé en outre par:

des moyens (35; 45, 46) réorientant lesdits moyens formant bandes (14, 15) de façon telle que les deuxièmes conducteurs (13) soient en pente descendante à partir des deuxièmes extrémités desdits composants (11); et

une deuxième station de vague de brasure (36) établissant une vague (61, 62) de brasure liquide possédant une configuration convexe transversale audit parcours (30) de façon telle que lesdites parties choisies deuxièmes conducteurs (13) traversent ladite vague et en émergent, ladite vague de configuration convexe (61, 62) possédant une surface décroissante en coupe transversale le long dudit axe (57, 30) ladite station de vague comprenant des moyens (70 à 74) pour enlever la brasure en excès des extrémités inférieures desdits deuxièmes conducteurs (13).

3. Appareil selon la revendication 1 ou 2, caractérisé en ce que lesdits moyens (70 à 74) pour enlever dudit conducteur (12, 13) toute brasure excessive qui y reste comprend des moyens de chauffage (70) pour maintenir ladite brasure en excès en phase liquide et des moyens de succion (73, 74) pour aspirer ladite brasure en excès dudit conducteur.

4. Appareil selon la revendication 3, caractérisé par des moyens destinés à diminuer la surface de section transversale de ladite configuration de vague convexe comprenant une cheminée verticale (50) pour un flux montant de brasure fondue (38) et une plaque de couvercle (60) pour réduire l'ouverture de ladite cheminée (50) le long dudit axe (57, 30).

5. Appareil selon la revendication 4, caractérisé en ce que ladite plaque de couvercle (60) est inclinée à partir dudit premier côté vers l'autre côté de ladite cheminée verticale (50) pour correspondre à la pente descendante dudit composant (11).

6. Appareil selon la revendication 5, caractérisé en ce que ladite plaque de couvercle (6) est de forme triangulaire.

## Patentansprüche

1. Anschlußdraht-Lötapparat umfassend eine Wellenlötstation (34, 36) zur Bildung einer Welle (61, 62) von flüssigem Lot und Mitteln (43 – 46, 20, 21) zum Transport elektrischer Komponenten (11) entlang einer Achse (57, 30), wobei die elektrischen Komponenten wenigstens einen geraden Leiter (12, 13) aufweisen der sich quer zu der Achse und durch die Lötwelle erstreckt, gekennzeichnet durch die folgenden Stationen in Folge:
eine Zuführrolle (20), die eine Reihe elektrischer Komponenten (11) auf Bändern (14, 15) trägt, die orthogonal die Enden der Leiter (12, 13) verbinden;
eine Vor-Reinigungsstation (31), die mit einer Düsenvorrichtung eine Reinigungslösung zu vorbestimmten Teilen des Leiters zuführt;
eine Flußmittelstation (32), die mit einem Schaumkopf flüssiges Flußmittel den genannten Teilen des Leiters zuführt;
Mittel (33; 43, 44) zum Ausrichten der Bänder, so daß die ersten Leitungen (12) abwärts von ersten Enden der Komponenten (11) geeignet sind;
wobei die Wellenlötstation (34) eine Welle (61, 62) aus flüssigem Lot mit einer konvexen Ausgestaltung quer zu der Bewegungsstrecke (30) bildet, so daß die ausgewählten Teile der Leitungen (12) die konvex ausgebildete Welle (61, 62) mit einer abnehmenden Querschittsfläche entlang der Achse (57, 30) durchlaufen und aus dieser austreten und wobei die Wellenlötstation Mittel (70 – 74) zur Entfernung von überschüssigem Lötmittel (65) an den unteren Enden der Leiter aufweist:
eine Kühlstation (37);
eine Nach-Reinigungsstation (38), die mit einer Düsenvorrichtung eine Spülflüssigkeit den genannten Teilen der Leiter zuführt;
eine Trocknungsstation (39); und eine Aufwickelrolle (21) für die Bänder (14, 15).

2. Apparat nach Anspruch 1, ferner gekennzeichnet durch Mittel (34; 45, 46) zum Neuausrichten der Bänder (14, 15), so daß zweite Leiter (13) von zweiten Enden der Komponenten (11) nach unten geneigt sind; und eine zweite Wellenlötstation (36) zur Bildung einer Welle (61, 62) von flüssigem Lot mit einer konvexen Ausgestaltung quer zu der Bewegungsstrecke (30), so daß die ausgewählten Teile der zweiten Leitungen (13) die konvexen ausgebildete Welle (61, 62) mit einer abnehmenden Querschnittsfläche entlang der Achse (57, 30) durchlaufen und aus dieser austreten und wobei die Wellenlötstation Mittel (70 – 75) zur Entfernung von überschüssigem Lötmittel an den unteren Enden der zweiten Leiter (13) aufweist.

3. Apparat nach Anspruch 1 oder 2, dadurch gekennzeichnet, daß die Mittel (70 – 74) zum Entfernen von überschüssigem Lötmittel eine Heizeinrichtung (70) umfassen, um das überschüssige Lötmittel in flüssigem Zustand zu halten, und eine Saugeinrichtung (73, 74) umfassen, um das überschüssige Lötmittel von dem Leiter wegzusaugen.

4. Apparat nach Anspruch 3, gekennzeichnet durch eine Vorrichtung zur Verminderung der Querschnittsfläche der konvexen Wellengestalt, welche einen vertikalen Kamin (50) für den Aufwärtsfluß des geschmolzenen Lötmittels (38) und eine Deckelplatte (60) für die Verringerung der Öffnung des Kamins (50) entlang der Achse (57, 30) umfaßt.

5. Apparat nach Anspruch 4, dadurch gekennzeichnet, daß die Deckelplatte (60) von der einen Seite zu der anderen Seite des vertikalen Kamins (50) geneigt ist, um eine Anpassung an die Abwärtsneigung der Komponenten (11) vorzugeben.

6. Apparat nach Anspruch 5, dadurch gekennzeichnet, daß die Deckelplattte (60) dreieckförmig ist.

_Fig. 2_

FEED ⌒20 → 16 → PRE-CLEAN ⌒31 | FLUX ⌒32 | TWIST ⌒33 | SOLDER WAVE ⌒34 | REVERSE TWIST ⌒35 | SOLDER WAVE ⌒36 | COOL AND UNTWIST ⌒37 | POST-CLEAN ⌒38 | DRY ⌒39 | TAKE-UP ⌒21

30

_Fig. 1_

_Fig. 8_

EP 0 226 650 B1

_Fig. 3_

_Fig. 4_

_Fig. 5_

_Fig. 6_

_Fig. 7_